# FASCICULE DE BREVET EUROPEEN

(11) **EP 2 563 641 B1**
(45) Date de publication et mention de la délivrance du brevet: **09.04.2014**
(21) Numéro de dépôt: 11723523.4
(22) Date de dépôt: 28.04.2011
(51) Int. Cl.: B62D 21/00, B60G 7/02, B60G 99/00

(54) **DISPOSITIF DE SUPPORT DE SUSPENSION**
VORRICHTUNG ZUR MONTAGE EINER AUFHÄNGUNG
SUSPENSION MOUNTING DEVICE

(30) Priorité: 29.04.2010 FR 1053331
(43) Date de publication de la demande: 06.03.2013
(73) Titulaire: Peugeot Citroën Automobiles SA, 78140 Vélizy Villacoublay (FR)
(72) Inventeur: KONDRATOFF, Axel, F-25550 Bavans (FR); MARCONOT, Pascal, F-25600 Sochaux (FR); CARIDROIT, Gilles, F-70200 Magny-Vernois (FR)
(86) Numéro de dépôt international: PCT/FR2011/050963
(87) Numéro de publication internationale: WO 2011/135261

(56) Documents cités:
- EP-A1- 0 678 441
- EP-A1- 1 564 112
- EP-A1- 1 916 130
- FR-A1- 2 859 450
- JP-A- 2001 199 214
- JP-A- 2002 321 639
- US-A- 4 501 436
- US-A- 4 674 791
- US-A1- 2007 290 525
- US-A1- 2009 079 232

## Description

La présente invention est relative à un dispositif de support de suspension.

Plus particulièrement, l'invention concerne un tel dispositif pour les deux roues d'un train roulant de véhicule, notamment automobile, comportant deux bras de suspension, un berceau auquel sont fixés latéralement lesdits bras par l'intermédiaire de deux points de fixation et une barre de renfort du berceau, cette barre étant prévue pour s'étendre transversalement au véhicule.

Ce genre de dispositif est connu du document US4501436 dans lequel la barre de renfort est fixée rigidement à deux longerons du berceau, à distance des points de fixation des bras de suspension, ces derniers étant sensiblement transversaux. Ce dispositif connu peut donner satisfaction dans sa fonction de rigidification du berceau mais il ne contribue pas à un bon comportement dynamique du véhicule, notamment lors des mouvements de lacet du véhicule. Le document JP2001199214 divulgue aussi un dispositif de support de suspension pertinent dans ce contexte.

La présente invention a notamment pour but de remédier aux inconvénients de l'art antérieur.

A cet effet, selon l'invention, l'invention a pour objet un dispositif de support de suspension pour les deux roues d'un train roulant de véhicule, notamment automobile, comportant deux bras de suspension, un berceau auquel sont fixés latéralement lesdits bras par l'intermédiaire de deux points de fixation et une barre de renfort du berceau, cette barre étant prévue pour s'étendre transversalement au véhicule, la barre de renfort étant reliée au berceau par ses extrémités fixées respectivement aux points de fixation desdits bras au berceau, lesdites extrémités de la barre de renfort étant fixées aux points de fixation à l'avant du berceau, caractérisé en ce que chacune des extrémités de la barre de renfort est fixée à son point de fixation par un axe de fixation qui traverse le berceau et l'extrémité correspondante du bras de suspension.

Dans divers modes de réalisation du dispositif selon l'invention, on peut éventuellement avoir recours en outre à l'une et/ou à l'autre des dispositions suivantes :
- la barre de renfort est située sous le berceau ;
- chaque axe de fixation est perpendiculaire à son bras de suspension ;
- la barre de renfort est longiligne et disposée sensiblement dans un plan contenant les axes de fixation ;
- chaque axe de fixation est une vis à l'extrémité filetée de laquelle est fixée l'extrémité correspondante de la barre de renfort par l'intermédiaire deux écrous enserrant cette extrémité de la barre ;
- d'une part chaque vis de fixation traverse deux parois sensiblement parallèles du berceau et d'autre part l'extrémité correspondante du bras de suspension est située entre ces deux parois et est fixée à la vis de fixation par l'intermédiaire d'une articulation ;
- la barre de renfort est un tube écrasé à ses extrémités fixées respectivement aux points de fixation des bras au berceau.

Par ailleurs, l'invention a également pour objet un véhicule, notamment automobile, comportant un train de roues avant et un train de roues arrière, caractérisé en ce qu'il comporte un dispositif de support de suspension conforme à l'invention pour les deux roues de l'un de ces trains.

Dans un mode de réalisation de ce véhicule, le dispositif de support de suspension est associé aux deux roues de son train avant.

Dans un mode de réalisation de ce véhicule, la barre de renfort est une barre transversale.

Dans un mode de réalisation de ce véhicule, les bras de suspension sont sensiblement transversaux.

D'autres buts, caractéristiques et avantages de l'invention apparaîtront au cours de la description suivante d'un de ses modes de réalisation, donné à titre d'exemple non limitatif, en regard des dessins joints.

Sur les dessins :

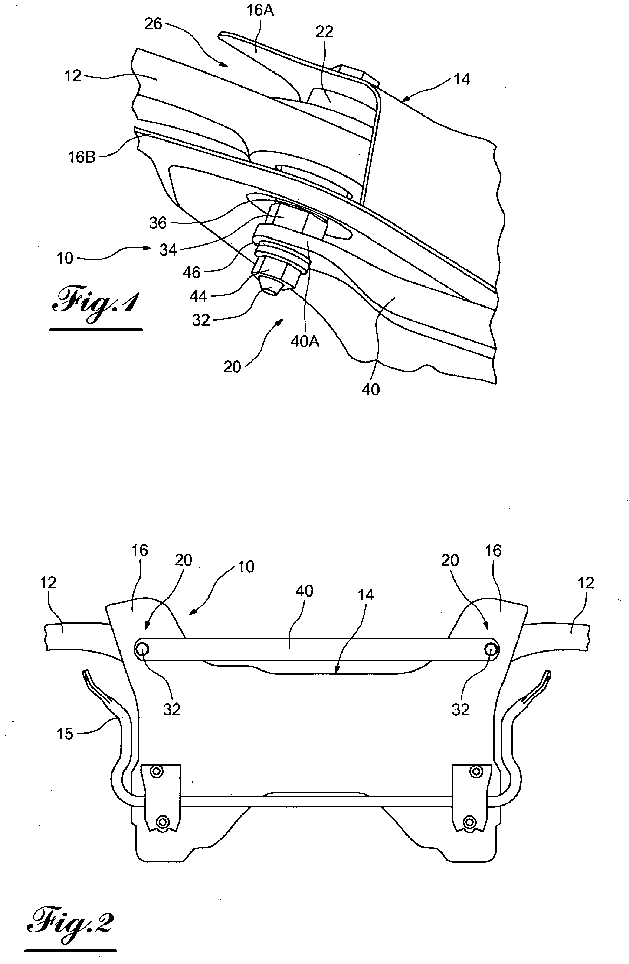

- la figure 1 est une vue en perspective de trois quarts face et de dessous représentant partiellement un dispositif selon l'invention ;
- la figure 2 est une vue de dessous du dispositif selon l'invention ;

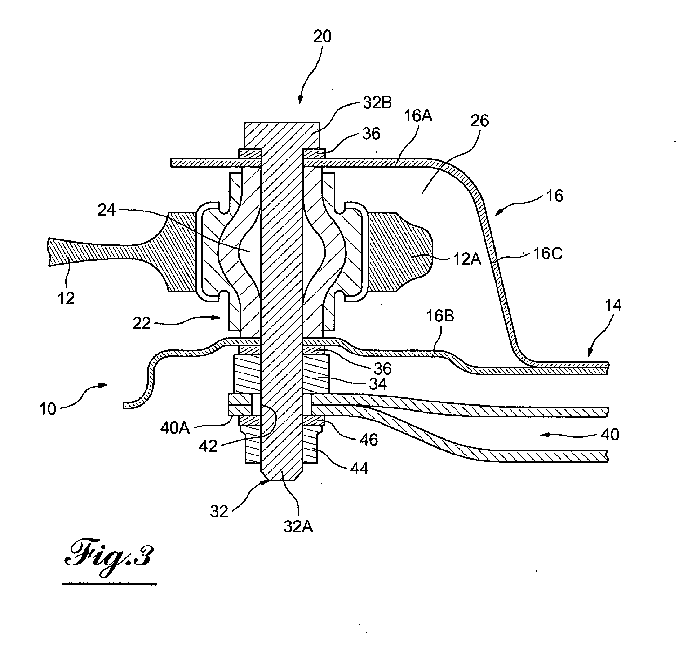

- la figure 3 est une vue en coupe transversale selon un plan vertical, représentant partiellement le dispositif selon l'invention.

Sur les différentes figures, les mêmes références désignent des éléments identiques ou similaires.

Dans la description qui va suivre, la direction désignée comme longitudinale correspond à l'axe d'avancement d'un véhicule comportant le dispositif selon l'invention.

En se reportant aux figures, la référence 10 désigne un dispositif de support de suspension pour les deux roues d'un train roulant de véhicule, en l'espèce son train avant.

Le dispositif comporte deux bras de suspension 12 et un berceau 14 supportant la suspension des roues du train avant du véhicule, ces bras et ce berceau étant de type connu.

Chaque bras de suspension 12 s'étend transversalement au véhicule et comporte une extrémité libre à laquelle est fixée l'une des roues par l'intermédiaire d'une fusée de type connue. Cette extrémité libre, côté extérieur du véhicule, n'est pas représentée aux figures. Côté intérieur du véhicule, l'autre extrémité de chaque bras 12, appelée extrémité d'articulation 12A, est fixée à une partie latérale avant 16 du berceau 14 par l'intermédiaire d'un point de fixation 20. Une barre antiroulis 15 est fixée au berceau 14, à l'arrière de ce dernier, à distance des points de fixation 20.

Chaque extrémité d'articulation 12A du bras de suspension 12 comporte un dispositif d'articulation 22 de type connu, pourvu d'un fût 24 de passage d'axe.

Le berceau 14 s'étend sensiblement suivant un plan horizontal. Chaque partie latérale avant 16 du berceau 14 comporte une paroi de tôle supérieure 16A et une paroi de tôle inférieure 16B qui sont assemblées l'une à l'autre et qui déterminent localement, par un pli 16C de la tôle supérieure 16A et entre deux portions parallèles desdites parois, un logement 26 recevant l'extrémité d'articulation 12A du bras de suspension 12.

Chaque point de fixation 20 comporte un axe de fixation 32 s'étendant sensiblement verticalement et traversant les parois parallèles 16A et 16B de la partie latérale 16 du berceau 14 et le fût 24 de l'extrémité d'articulation 12A correspondante du bras de suspension 12.

Chaque axe de fixation 32 est constitué par une vis ayant sa tige filetée 32A traversant le berceau 14 et le fût 24. La vis a sa tête 32B qui est située côté face supérieure de la tôle supérieure 16A. Un écrou 34 de serrage du bras 12 est situé côté face inférieure de la tôle inférieure 16B. Des rondelles 36 sont interposées d'une part entre la tête 32 et la tôle supérieure 16A et d'autre part entre l'écrou 34 et la tôle inférieure 16B.

Le dispositif de support 10 comporte une barre 40 de renfort du berceau 14. Cette barre 40 est longiligne, sensiblement rectiligne et s'étend sensiblement horizontalement en étant transversale au véhicule. Elle est située sous le berceau 14, à l'avant de ce dernier, dans le plan contenant les axes de fixation 32.

A ses extrémités 40A, la barre de renfort 40 est reliée au berceau en étant fixée respectivement aux points de fixation 20 desdits bras 12 au berceau 14. La barre de renfort 40 est constituée par un tube présentant une section transversale oblongue et ayant ses extrémités 40A fixées respectivement aux points de fixation 20 des bras au berceau.

A chacune de ses extrémités 40A, la barre de renfort 40 est écrasée et comporte un trou 42 de passage d'axe. Ce trou 42 est traversé avec jeu par la tige filetée 32A, sur laquelle est vissé un écrou 44 de serrage de ladite barre 40. Une rondelle 46 est interposée entre l'écrou 44 et l'extrémité 40A correspondante. Ainsi, aux points de fixation 20 des bras au berceau, la barre de renfort 40 est fixée à l'axe 32 constitué par la vis, par l'intermédiaire des deux écrous 34 et 44 qui enserrent ladite barre 40 à chacune de ses extrémités 40A.

Avantageusement, dans le dispositif de support de suspension 10, la barre de renfort 40 du berceau 14 est fixée sous ledit berceau 14 entre les points de fixation 20 qui servent à la fixation des bras de suspension 12 au berceau 12. Le dispositif 10 permet, par exemple en étant utilisé pour les roues du train avant du véhicule, d'améliorer la prestation dynamique du véhicule, en particulier dans le cas d'un véhicule équipé d'un moteur de forte puissance.

Dans une telle configuration d'utilisation, par rapport au montage dans un véhicule dont la barre de renfort de berceau est fixée différemment au berceau, la une amélioration de la prestation dynamique du véhicule est perceptible dès les faibles accélérations latérales, même de l'ordre de 0,3g (l'unité g correspondant à l'intensité de la pesanteur) et dans les phases transitoires de trajectoire. Cette amélioration de la réponse à un changement de cap permet d'obtenir un train avant plus incisif pour une meilleure inscription en courbe et plus accrocheur pour une meilleure stabilité de trajectoire.

De plus, avantageusement, le dispositif selon l'invention peut utiliser un berceau du même type que celui prévu pour un véhicule qui n'est pas équipé d'une barre de renfort. Ainsi, dans une même famille de véhicules, une même référence de berceau peut être utilisée en tant pour les modèles équipés de moteurs de forte puissance et pourvus de barre de renfort de berceau que pour les modèles équipés de petits moteurs et dépourvus d'une telle barre.

Dans des variantes de réalisation non représentées, chaque point de fixation est un système de fixation équivalent au système à vis et à écrou ci-dessus décrit. De même, en variante, la barre présente un profil tubulaire différent, par exemple ovoïde, ou est constituée par un profilé.

## Revendications

1. Dispositif de support de suspension pour les deux roues d'un train roulant de véhicule, comportant deux bras de suspension (12), un berceau (14) auquel sont fixés latéralement lesdits bras par l'intermédiaire de deux points de fixation (20) et une barre (40) de renfort du berceau, cette barre étant prévue pour s'étendre transversalement au véhicule, la barre de renfort (40) étant reliée au berceau (14) par ses extrémités (40A) fixées respectivement aux points de fixation (20) desdits bras au berceau, lesdites extrémités (40A) de la barre de renfort (40) étant fixées aux points de fixation (20) à l'avant du berceau (14), **caractérisé en ce que** chacune des extrémités (40A) de la barre de renfort (40) est fixée à son point de fixation (20) par un axe de fixation (32) qui traverse le berceau (14) et l'extrémité correspondante (12A) du bras de suspension (12).

2. Dispositif selon la revendication précédente, dont la barre de renfort (40) est située sous le berceau (14).

3. Dispositif selon la revendication précédente, dans lequel d'une part chaque axe de fixation (32) est perpendiculaire à son bras de suspension (12) et d'autre part la barre de renfort (40) est longiligne et disposée sensiblement dans un plan contenant les axes de fixation.

4. Dispositif selon l'une quelconque des revendications précédentes, dans lequel chaque axe de fixation (32) est une vis à l'extrémité filetée de laquelle est fixée l'extrémité correspondante (40A) de la barre de renfort (40) par l'intermédiaire deux écrous (34, 44) enserrant cette extrémité.

5. Dispositif selon la revendication précédente, dans lequel d'une part chaque vis de fixation (32) traverse deux parois sensiblement parallèles (16A, 16B) du berceau (14) et d'autre part l'extrémité correspondante (12A) du bras de suspension (12) est située entre ces deux parois et est fixée à la vis de fixation par l'intermédiaire d'une articulation (22).

6. Dispositif selon l'une quelconque des revendications précédentes, dont la barre de renfort (40) est un tube écrasé à ses extrémités (40A) fixées respectivement aux points de fixation (20) des bras (12) au berceau (14).

7. Véhicule, comportant un train de roues avant et un train de roues arrière, **caractérisé en ce qu'**il comporte un dispositif (10) de support de suspension conforme à l'une quelconque des revendications précédentes pour les deux roues de l'un de ces trains.

8. Véhicule selon la revendication précédente, dont le dispositif (10) de support de suspension est associé aux deux roues de son train avant.

9. Véhicule selon l'une quelconque des revendications 7 à 8, dont la barre de renfort (40) est une barre transversale.

10. Véhicule selon l'une quelconque des revendications 7 à 9, dont les bras de suspension (12) sont sensiblement transversaux.

## Patentansprüche

1. Vorrichtung zum Tragen einer Aufhängung für die zwei Räder eines Fahrzeugfahrwerks, die zwei Aufhängungsarme (12), einen Sattel (14), an dem seitlich die Arme über zwei Befestigungsstellen (20) befestigt sind, und eine Verstärkungsstange (40) des Sattels aufweist, wobei die Stange vorgesehen ist, um sich quer zu dem Fahrzeug zu erstrecken, wobei die Verstärkungsstange (40) mit dem Sattel (14) über ihre Enden (40A) verbunden ist, die jeweils an den Befestigungsstellen (20) der Arme an dem Sattel befestigt sind, wobei die Enden (40A) der Verstärkungsstange (40) an den Befestigungsstellen (20) an der Vorderseite des Sattels (14) befestigt sind, **dadurch gekennzeichnet, dass** jedes dieser Enden (40A) der Verstärkungsstange (40) an seiner Befestigungsstelle (20) durch einen Befestigungsbolzen (32) befestigt ist, der den Sattel (14) und das entsprechende Ende (12A) des Aufhängungsarms (12) durchquert.

2. Vorrichtung nach dem vorhergehenden Anspruch, deren Verstärkungsstange (40) unter dem Sattel (14) liegt.

3. Vorrichtung nach dem vorhergehenden Anspruch, bei der einerseits jeder Befestigungsbolzen (32) zu seinem Aufhängungsarm (12) senkrecht ist und andererseits die Verstärkungsstange (40) länglich und im Wesentlichen in einer Ebene, die die Befestigungsbolzen enthält, angeordnet ist.

4. Vorrichtung nach einem der vorhergehenden Ansprüche, bei der jeder Befestigungsbolzen (32) eine Schraube ist, an deren Gewindeende das entsprechende Ende (40A) der Verstärkungsstange (40) über zwei Muttern (34, 44), die dieses Ende umspannen, befestigt ist.

5. Vorrichtung nach dem vorhergehenden Anspruch, bei der einerseits jede Befestigungsschraube (32) zwei im Wesentlichen parallele Wände (16A, 16B) des Sattels (14) durchquert, und andererseits das entsprechende Ende (12A) des Aufhängungsarms (12) zwischen diesen zwei Wänden liegt und an der Befestigungsschraube über ein Gelenk (22) befestigt ist.

6. Vorrichtung nach einem der vorhergehenden Ansprüche, deren Verstärkungsstange (40) ein Rohr ist, das an seinen Enden (40A), die jeweils an den Befestigungsstellen (20) der Arme (12) an dem Sattel (14) befestigt sind, gequetscht ist.

7. Fahrzeug, das ein vorderes Fahrwerk und hinteres Fahrwerk aufweist, **dadurch gekennzeichnet, dass** es eine Vorrichtung (10) zum Tragen einer Aufhängung in Übereinstimmung mit einem der vorhergehenden Ansprüche für die zwei Räder eines dieser Fahrwerke aufweist.

8. Fahrzeug nach dem vorhergehenden Anspruch, dessen Vorrichtung (10) zum Tragen einer Aufhängung mit den zwei Rädern seines vorderen Fahrwerks verbunden ist.

9. Fahrzeug nach einem der Ansprüche 7 bis 8, dessen Verstärkungsstange (40) eine Querstange ist.

10. Fahrzeug nach einem der Ansprüche 7 bis 9, dessen Aufhängungsarme (12) im Wesentlichen quer sind.

## Claims

1. A suspension mounting device for the two wheels of a running gear of a vehicle, comprising two suspension arms (12), a cradle (14) to which said arms are laterally attached by means of two attachment points (20) and a reinforcement bar (40) of the cradle, this bar being provided to extend transversely to the vehicle, the reinforcement bar (40) being connected to the cradle (14) by its ends (40A) attached respectively to the attachment points (20) of said arms to the cradle, said ends (40A) of the reinforcement bar (40) being attached to the attachment points (20) at the front of the cradle (14), **characterized in that** each of the ends (40A) of the reinforcement bar (40) is attached at its attachment point (20) by an attachment axis (32) which passes through the cradle (14) and the corresponding end (12A) of the suspension arm (12).

2. The device according to the preceding claim, the reinforcement bar (40) of which is situated beneath the cradle (14).

3. The device according to the preceding claim, in which on the one hand each attachment axis (32) is perpendicular to its suspension arm (12) and on the other hand the reinforcement bar (40) is longilineal and is disposed substantially in a plane containing the attachment axes.

4. The device according to any one of the preceding claims, in which each attachment axis (32) is a screw, at the threaded end of which is attached the corresponding end (40A) of the reinforcement bar (40) by means of two nuts (34, 44) encompassing this end.

5. The device according to the preceding claim, in which on the one hand each attachment screw (32) passes through two substantially parallel walls (16A, 16B) of the cradle (14) and on the other hand the corresponding end (12A) of the suspension arm (12) is situated between these two walls and is attached to the attachment screw by means of an articulation (22).

6. The device according to any one of the preceding claims, the reinforcement bar (40) of which is a tube crushed at its ends (40A) which are attached respectively to the attachment points (20) of the arms (12) to the cradle (14).

7. A vehicle, comprising a front wheel assembly and a rear wheel assembly, **characterized in that** it comprises a suspension mounting device (10) according to any one of the preceding claims for the two wheels of one of these assemblies.

8. The vehicle according to the preceding claim, the suspension mounting device (10) of which is associated with the two wheels of its front axle.

9. The vehicle according to any one of claims 7 to 8, the reinforcement bar (40) of which is a transverse bar.

10. The vehicle according to any one of claims 7 to 9, the suspension arms (12) of which are substantially transverse.
